# EUROPEAN PATENT APPLICATION

(11) **EP 2 937 944 A1**
(43) Date of publication of application: **28.10.2015**
(21) Application number: 15162787.4
(22) Date of filing: 08.04.2015
(51) Int. Cl.: H01R 13/24, H01R 13/631, H01R 12/70

(54) **CONNECTOR**

(30) Priority: 15.04.2014 JP 2014083628
(71) Applicant: Iriso Electronics Co., Ltd., Kanagawa 222-0033 (JP)
(72) Inventor: Oguro, Jun, Yokohama, Kanagawa 222-0033 (JP)
(74) Representative: Lorenz, Markus

(57) **Abstract**

An elastic piece of a terminal includes an end portion serving as a fulcrum on which a contact projection is displaced, and an internal contact portion that is urged on the end portion into pressing contact with a flexible printed circuit (FPC) of a lens to make conductive connection within a housing by displacement of the contact projection. Thus, when the contact projection is pressed by a lens connecting part of a camera body, the internal contact portion is brought into firm pressing contact with the FPC of the lens by the action of leverage, and reliable conductive contact is established between the contact projection and the internal contact portion.

## Description

### BACKGROUND OF THE INVENTION

### 1. Field of the Invention

The present invention relates to a connector.

### 2. Description of the Related Art

In an electric apparatus configurated by assembling a plurality of devices and components for use, various connectors are used to connect conductors, such as flexible printed circuits (FPCs), provided in the respective devices and components.

As an example of such a connector, there is known a connector that electrically connects a camera body of a digital camera including an automatic focusing detection device to an interchangeable lens (for example, Japanese Unexamined Patent Application Publication No. 58-063929).

This connector includes terminals shaped like leaf springs, and the terminals are disposed in terminal receiving portions provided within the thickness of a cylindrical housing of an interchangeable lens. That is, the terminals are fixed at one-side ends to the housing in an immovable state, and free ends shaped like cantilevers extending therefrom have their respective contact portions. The contact portions are to be connected to contact members provided in a lens connecting part of a camera body serving as a connecting object.

The contact portions protrude outward from terminal insertion holes provided in the housing. When the contact members in the lens connecting part of the camera body come into contact with the contact portions, the contact portions are displaced on the portions fixed to the housing as the fulcrums, and are brought into pressing contact with the contact members to make conductive connection therebetween.

In the above-described electric apparatus in which devices, units, and components (hereinafter simply referred to as "devices") are mechanically and electrically connected for use, a minute clearance formed as play to facilitate mechanical connection between the devices or a backlash resulting from long-term use causes failure in electric connection. That is, in the above-described connector for making electric connection, one-side ends of the terminals are fixed to the housing, and therefore, the contact positions of the terminals do not move. For this reason, even if the mechanical connection state between the camera body and the interchangeable lens is slightly changed from the regular mechanical connection state by the clearance or backlash, regular contact positions between the contact members of the lens connecting part in the camera body and the terminals of the interchangeable lens are misaligned. This may hinder proper electric connection.

Trouble similar to this may also occur when the camera undergoes vibration and shock during use or portage. That is, the mechanical connection state of the camera body and the interchangeable lens is slightly changed by vibration or shock, and the regular contact positions are misaligned.

### SUMMARY OF THE INVENTION

The present invention has been made in the context of the above-described related art, and an object of the invention is to provide a connector that can reliably maintain electric conductive connection even when devices to be mechanically connected are misaligned.

To achieve the above object, the present invention has the following features.

That is, the present invention provides a connector including a housing and a terminal provided in the housing. The terminal includes a first contact portion to be displaced toward an inside of the housing by contact with a first connecting object provided outside the housing, and an elastic piece extending from the first contact portion. The elastic piece includes a fulcrum portion serving as a fulcrum on which the first contact portion is displaced, and a second contact portion that is urged on the fulcrum portion into pressing contact with a second connecting object to make conductive connection within the receiving portion of the housing by the displacement of the first contact portion.

According to this aspect of the invention, the action of leverage is exerted by using the first contact portion, the second contact portion, and the fulcrum portion as the force point, the action point, and the fulcrum, respectively, and the first contact portion is displaced on the fulcrum portion by contact with the first connecting object. Hence, it is possible to bring the second contact portion into firm pressing contact with the second connecting object while generating spring force in the elastic piece. Therefore, reliable conductive contact can be made at the first contact portion and the second contact portion, and connector connection with high connection reliability can be realized.

Preferably, the elastic piece is shaped like a flat plate.

Since the elastic piece is shaped like a flat plate, the thicknesses of the terminal and the connector can be reduced. Therefore, it is possible to reduce the size of a device, a unit, or a component including the connector.

Preferably, the housing includes a receiving portion in which the terminal is movably disposed.

In a connector in which a terminal is fixed to a housing, a clearance between devices provided for mechanical connection or a backlash resulting from long-term use causes failure in electric connection, as described above.

In contrast, according to the aspect of the present invention, the housing includes the receiving portion in which the terminal is movably disposed. Therefore, even if the regular contact position is changed by a clearance, a backlash, vibration, or shock, the terminal can move within the connector when the first connecting object is shifted. This can reliably maintain electric conductive connection. Further, even if the terminal is pressed by the first connecting object when the first connecting object is fitted in and connected to the connector, since the terminal is movable, proper conductive connection can be achieved in accordance with the fitting state between the first connecting object and the connector.

More specifically, according to the aspect of the present invention employing the movable terminal, the housing may include a receiving portion for the elastic piece, and the elastic piece may be held movably in a plate surface direction thereof within the receiving portion.

Preferably, the first contact portion is formed as a contact projection, the housing has a contact insertion hole in which the contact projection is inserted, and a movement gap is provided between the contact projection and the contact insertion hole to allow movement of the contact projection toward a rim of the contact insertion hole.

In this case, the first contact portion can be formed as the contact projection shaped like a projecting portion and having high connection reliability, and can be moved within the contact insertion hole.

Preferably, the terminal in the housing includes a plurality of terminals arranged in parallel, and the contact insertion hole is shaped to have a larger hole width in a direction intersecting a pitch direction of the terminals arranged in parallel than in the pitch direction.

In this case, even when a plurality of terminals are provided, they can be arranged in parallel at a narrow pitch while ensuring the movement gap. Therefore, the size of the connector in the arrangement direction of the terminals can be reduced.

Preferably, the housing has a curved shape, and the terminals are arranged in parallel in a curving direction of the housing.

In this case, the connector in which the housing has the curved shape can be realized. Therefore, the connector can be provided in a curved housing of an electric apparatus such as the lens connecting part of the camera body and the housing of the interchangeable lens described above.

Preferably, the housing is formed by superposing at least a first platelike member and a second platelike member so that the receiving portion is formed between the first platelike member and the second platelike member, and any of the first platelike member and the second platelike member has an opening to allow the first contact portion to be displaced by contact with the first connecting object.

According to this, since the opening prevents interference between the displaced first contact portion and the housing, the connector can have a thin housing. This can contribute to size reduction of the electric apparatus. In this case, the first contact portion to be displaced can be configured such as not to protrude outward through the thickness of the opening of the housing. Thus, since the displaced first contact portion does not protrude outward from the connector, the terminal does not interfere with other peripheral members.

According to the connector of the aspect of the present invention, reliable conductive connection can be maintained even if the regular contact position is shifted by a slight clearance provided for mechanical connection of devices or a backlash resulting from long-term use, or by vibration or shock. Hence, both mechanical connection and electric connection can be attained. This can contribute to operational stability of the electric apparatus in which the devices, units, and components are connected for use.

### BRIEF DESCRIPTION OF THE DRAWINGS

Fig. 1 is a perspective view of a connector according to a first embodiment, as viewed from above.
Fig. 2 is a perspective view of the connector illustrated in Fig. 1, as viewed from below.
Fig. 3 is a front view of the connector of Fig. 1.
Fig. 4 is a rear view of the connector of Fig. 1.
Fig. 5 is a plan view of the connector of Fig. 1.
Fig. 6 is a bottom view of the connector of Fig. 1.
Fig. 7 is a left side view of the connector of Fig. 1.
Fig. 8 is a perspective view of a terminal illustrated in Fig. 1.
Fig. 9 is an exploded view of a housing illustrated in Fig. 1.
Fig. 10 is a cross-sectional view of the connector of Fig. 1, taken along line X-X of Fig. 3.
Fig. 11 is an operation diagram illustrating a state in which a connecting object is connected to the connector of Fig. 10.
Fig. 12 is a perspective view of a connector according to a second embodiment, as viewed from above.
Fig. 13 is a perspective view of the connector illustrated in Fig. 12, as viewed from below.
Fig. 14 is a front view of the connector of Fig. 12.
Fig. 15 is a rear view of the connector of Fig. 12.
Fig. 16 is a plan view of the connector of Fig. 12.
Fig. 17 is a bottom view of the connector of Fig. 12.
Fig. 18 is a left side view of the connector of Fig. 12.
Fig. 19 is a perspective view of a terminal illustrated in Fig. 12.
Fig. 20 is a cross-sectional view of the connector of Fig. 12, taken along line XX-XX of Fig. 14.
Fig. 21 is an operation diagram illustrating a state in which a connecting object is connected to the connector of Fig. 20.

### DESCRIPTION OF THE PREFERRED EMBODIMENTS

Embodiments of the present invention will be described below with reference to the drawings. Structures common to the following embodiments are denoted by the same reference numerals, and redundant descriptions thereof are skipped.

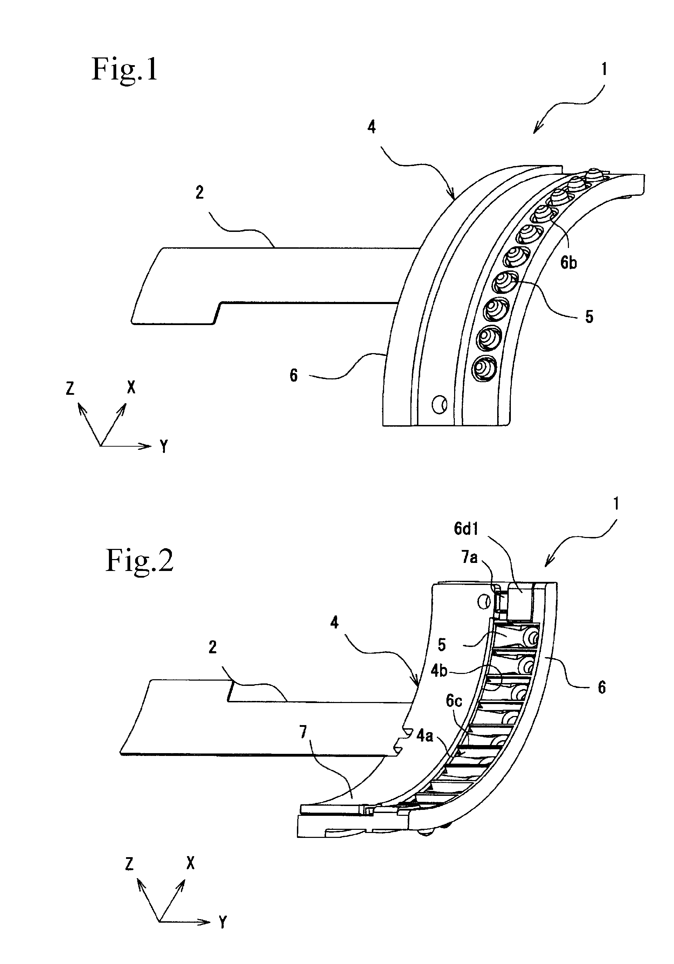

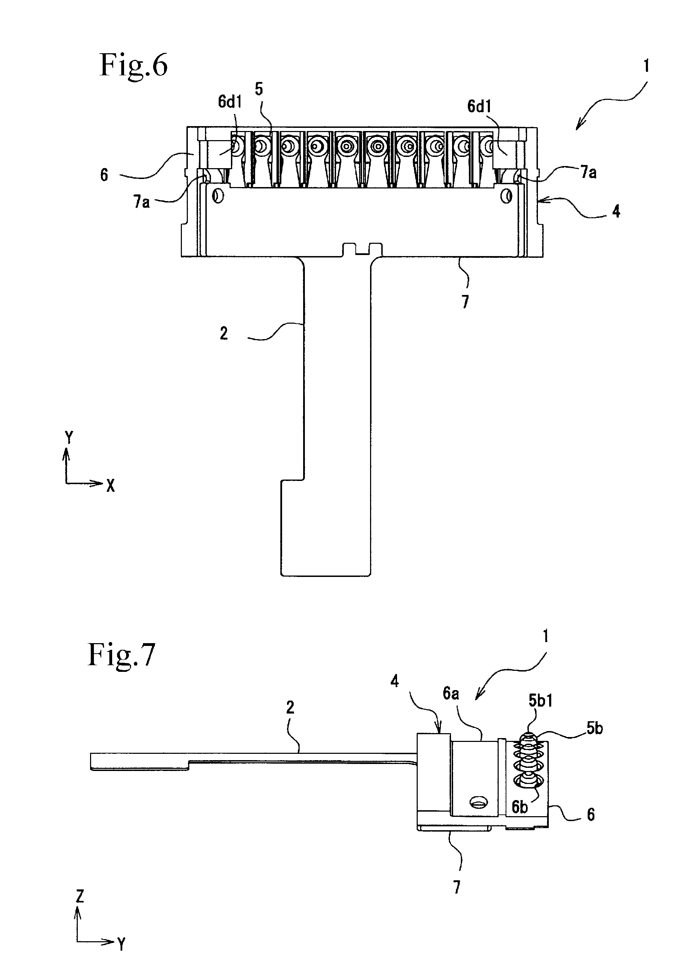

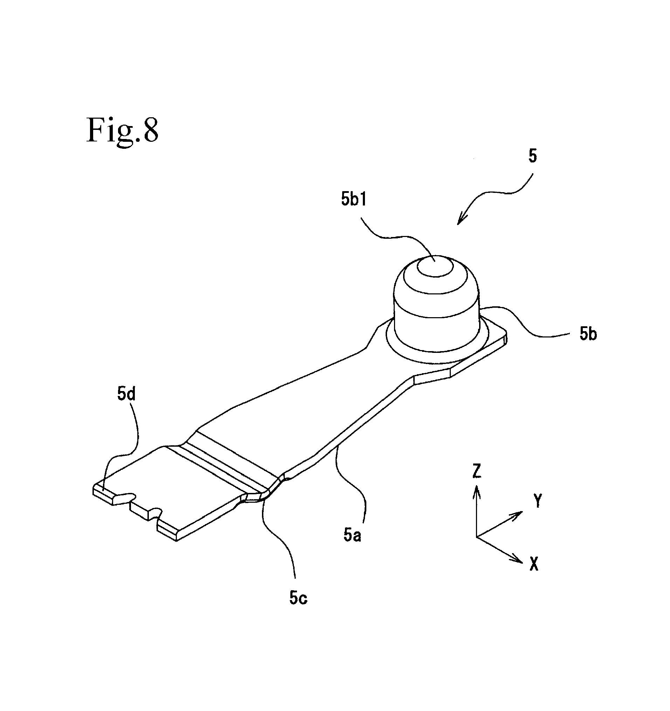

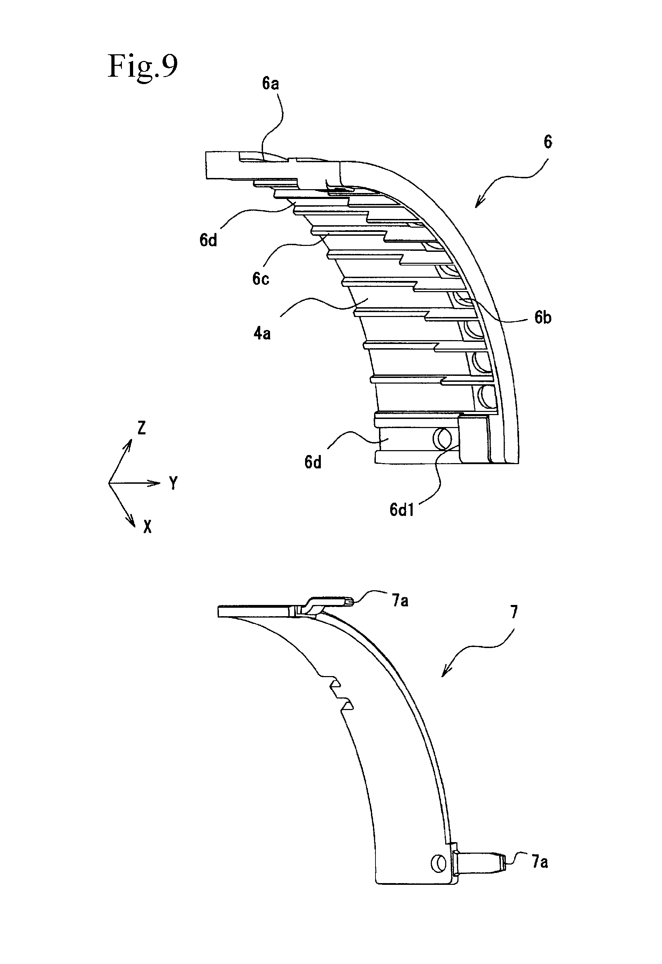

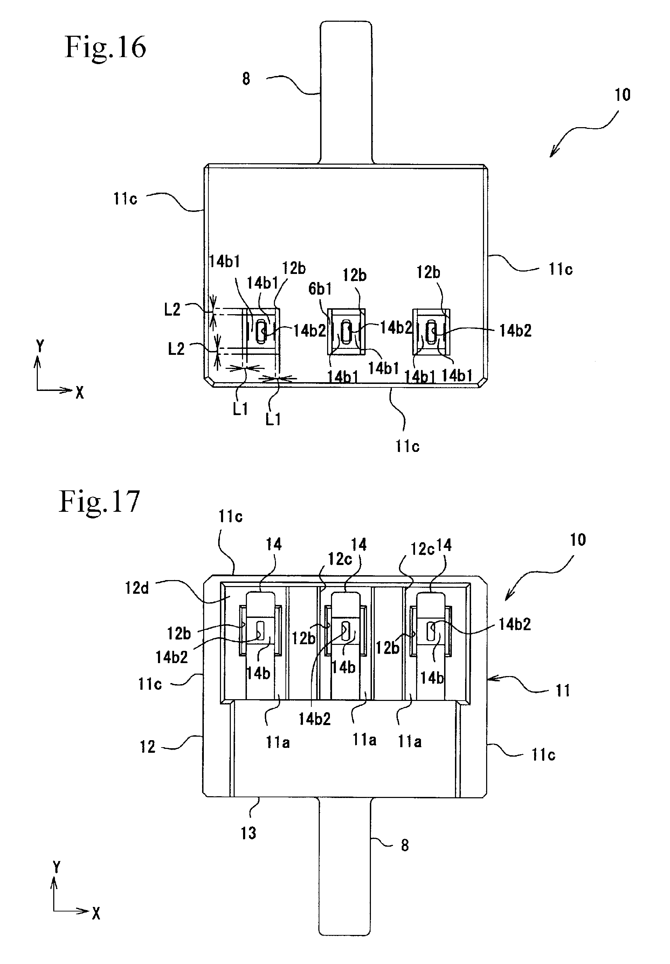

In the specification, claims, and drawings of the present application, the widthwise direction along the longer-side direction of connectors 1 and 10 illustrated in Figs. 1 to 21 is referred to as an X-direction, the front-rear direction along the shorter-side direction of the connectors 1 and 10 is referred to as a Y-direction, and the height direction of the connectors 1 and 10 is referred to as a Z-direction. A plan side of the connectors 1 and 10 in the height direction Z is referred to as an "upper side", and a bottom side of the connectors 1 and 10 is referred to as a "lower side." The descriptions of upper, lower, right, left, front, and rear directions do not intend to limit the mounting direction and use direction of the connector of the present invention.

### First Embodiment [Figs. 1 to 11]

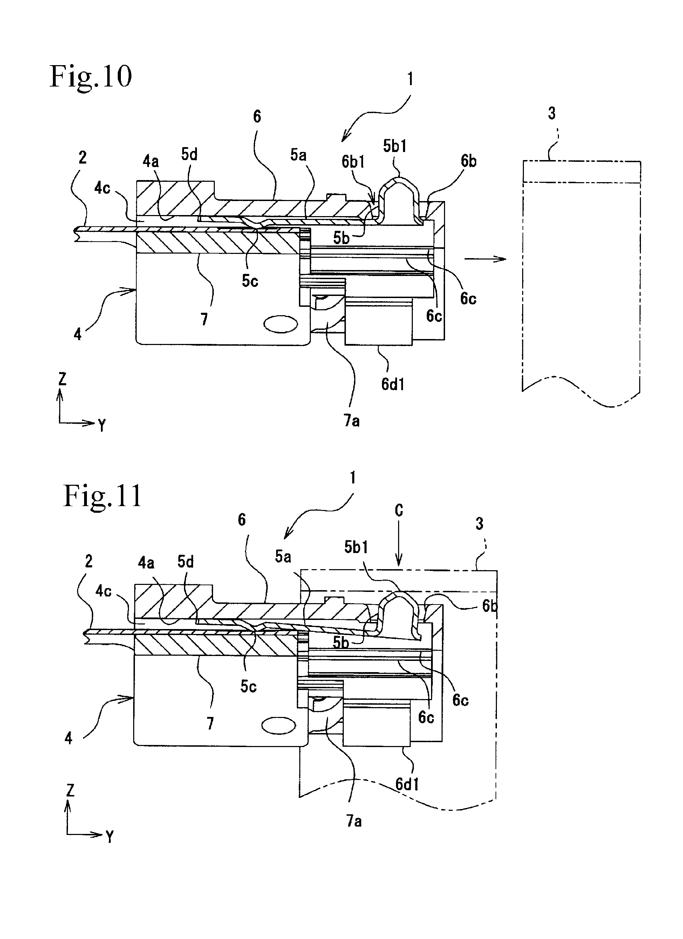

A connector 1 according to a first embodiment is provided, for example, in a lens of an unillustrated digital camera, and is used to make conductive connection to contact portions in a lens connecting part 3 of a camera body serving as a "first connecting object", as illustrated in Fig. 11.

The connector 1 according to the first embodiment includes a housing 4 and a plurality of terminals 5 provided in the housing 4.

### [Housing]

As illustrated in Figs. 1 to 7 and 9 to 11, the housing 4 includes an upper plate 6 serving as a "first platelike member" and a lower plate 7 serving as a "second platelike member". In a state in which the upper and lower plates 6 and 7 are superposed and fixed to each other, a plurality of receiving portions 4a for receiving elastic pieces 5a of the terminals 5 are formed between the upper and lower plates 6 and 7. The upper and lower plates 6 and 7 are each formed by a substantially rectangular resin plate, and are curved in an arc shape. This shape conforms to the shape of the lens connecting part 3 of the camera body serving as the connecting object.

The upper plate 6 includes an attachment portion 6a to be attached to the lens connecting part 3, contact insertion holes 6b in which contact projections 5b of the terminals 5 are to be inserted, and partitioning portions 6c that separate the adjacent receiving portions 4a. The attachment portion 6a is provided on an outer side surface of the upper plate 6 curved in the arc shape, and the partitioning portions 6c are provided on an inner side surface 6d opposite from the attachment portion 6a.

A plurality of contact insertion holes 6b are arranged in parallel and adjacently to an edge of the upper plate 6 along the longer-side direction X, and communicate between the insides and the outsides of the receiving portions 4a of the housing 4. Through the contact insertion holes 6b, contact projections 5b of the terminals 5 to be described later protrude outward from the insides of the receiving portions 4a.

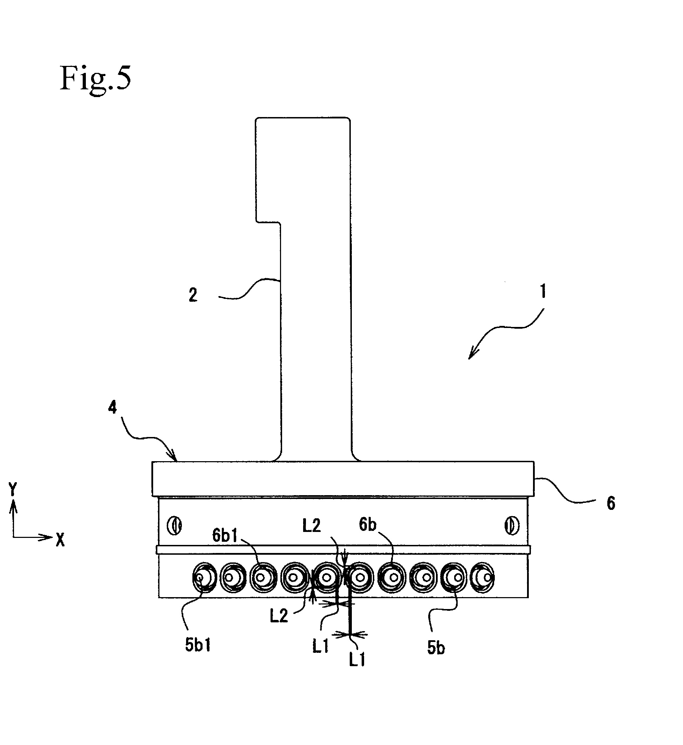

Between the contact projections 5b of the terminals 5 and the contact insertion holes 6b, movement gaps 6b1 are provided to allow the contact projections 5b to move in the hole width directions (longer-side direction X and shorter-side direction Y) of the contact insertion holes 6b. As illustrated in Fig. 5, the contact insertion holes 6b are each nearly shaped like an ellipse that is narrow in a pitch direction of the terminals 5 (longer-side direction X) and is wide in a direction intersecting the pitch direction (shorter-side direction Y). Therefore, the terminals 5 can move within the contact insertion holes 6b by a length L1 of the movement gaps 6b1 along the X-direction and a length L2 of the movement gaps 6b1 along the Y-direction. The length L2 of the movement gaps 6b1 along the Y-direction is larger than the length L1 along the X-direction so that the moving range is wider along the Y-direction. Further,
on the inner side surface 6d of the upper plate 6, fixing portions 6d1 are provided so that attachment portions 7a of the lower plate 7 to be described later are fixedly fitted therein.

The lower plate 7 is provided opposed to the inner side surface 6d of the upper plate 6. Further, the size of the lower plate 7 in the shorter-side direction Y corresponds to about half the size of the upper plate 6. From opposite ends of the lower plate 7 in the longer-side direction X, attachment portions 7a project along the shorter-side direction Y. As will be described later, the attachment portions 7a are used to fix the lower plate 7 to the upper plate 6.

Between the upper plate 6 and the lower plate 7 of the housing 4, an introduction port 4c for an FPC 2 is provided. The FPC 2 is fixed to the lower plate 7 beforehand by a fixing member such as adhesive, and the terminals 5 and the FPC 2 are already in contact with each other in a state in which the terminals 5 are disposed in the housing 4.

### [Terminals]

The terminals 5 are formed by conductive metal pieces. As illustrated in Figs. 1 to 8, 10, and 11, each of the terminals 5 includes a contact projection 5b serving as a "first contact portion" to be in conductive contact with a contact portion (not illustrated) in the lens connecting part 3 of the camera body serving as the "first connecting object", and an elastic piece 5a extending from the contact projection 5b and having an internal contact portion 5c serving as a "second contact portion" to be in contact with the FPC 2 serving as a "second connecting object" within the housing 4. An end portion 5d on a free end side of the elastic piece 5a functions as a "fulcrum portion."

The contact projection 5b is provided at one end of the elastic piece 5a, and is nearly shaped like a hollow column having a mountain-shaped distal end portion. At the top of the mountain-shaped distal end portion, a contact portion 5b1 is provided to be in conductive contact with the lens connecting part 3.

In the elastic piece 5a, the internal contact portion 5c is provided on a side of the end portion 5d opposite from the contact projection 5b. That is, since the internal contact portion 5c is closer to the end portion 5d than the longitudinal center of the elastic piece 5a, great contact pressure can be generated at the internal contact portion 5c by the action of leverage to be described later. Further, the internal contact portion 5c is formed by bending the terminal 5 to project in a V-shaped cross-section to a side opposite from the side where the contact projection 5b projects.

The internal contact portion 5c is made wider than the contact projection 5b to increase rigidity. Since the terminal 5 exerts great spring force by the action of leverage and great stress is applied to the internal contact portion 5c at contact with the FPC 2, the internal contact portion 5c is made wide to increase rigidity so that the bent internal contact portion 5c is not crushed and the contact force is not reduced.

The elastic piece 5a is tapered toward the contact projection 5b. Thus, when the contact projection 5b is brought into pressing contact from the side of the lens connecting part 3, spring elasticity on the side of the contact projection 5b of the elastic piece 5a is increased to enhance flexibility in displacement. The elastic piece 5a is provided as a movable piece that is movable within the corresponding receiving portion 4a in the housing 4.

The elastic piece 5a is shaped like a flat plate over the entire length. This can reduce the size (thickness) of the connector 1 in the height direction Z, for example, compared with a terminal structure in which the elastic piece 5a has a folded portion folded back in a U-shape.

The above-described terminal 5 does not have a portion to be fixed to the housing 4, but is held movably not only in the displacement direction (Z-direction) but also in the plate surface direction (X-Y plane direction) of the elastic piece 5a intersecting the displacement direction in a state in which the terminal 5 is disposed in the housing 4. The internal contact portion 5c is in light pressing contact with the contact portion of the FPC 2 within the receiving portion 4a. Therefore, even when the connector 1 is shaken, the terminal 5 does not move around within the housing 4 and does not cause noise.

### [Description of Assembly Method for Connector 1]

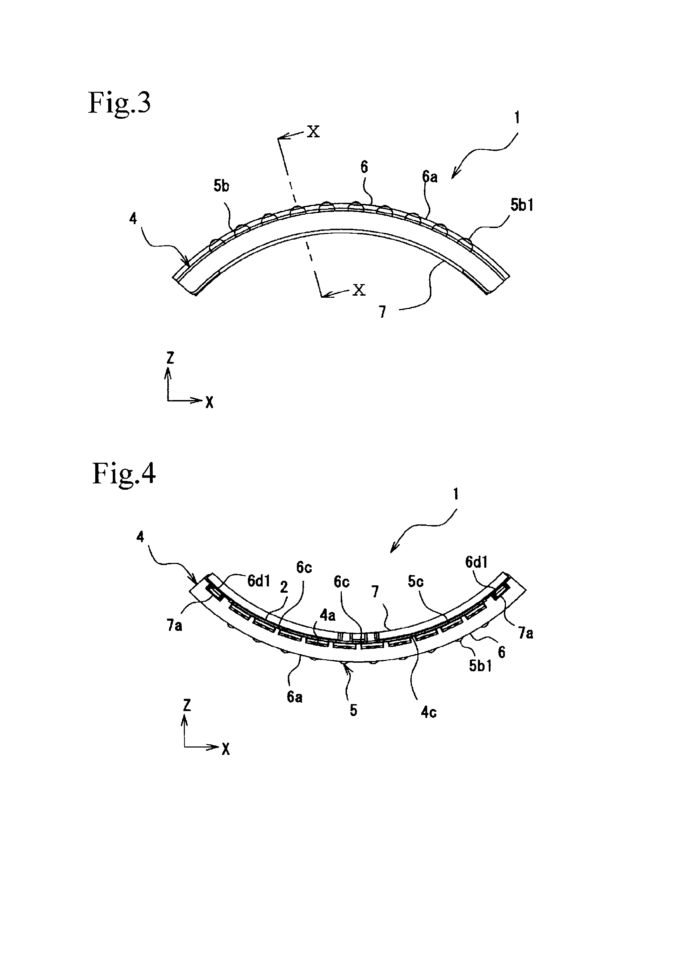

To assemble the connector 1, first, the terminals 5 are arranged one by one between the partitioning portions 6c of the upper plate 6. After that, as illustrated in Fig. 4, the attachment portions 7a of the lower plate 7 are fitted in the fixing portions 6d1 of the upper plate 6, and the lower plate 7 is superposed on the upper plate 6 and is finally screwed (not illustrated). Thus, the lower plate 7 does not come off the upper plate 6, but can be fixed reliably.

The lower plate 7 is superposed on and attached to the upper plate 6 so that it is flush with an edge of the upper plate 6 on a side opposite from the side of the contact insertion holes 6b. In this state, the receiving portions 4a for the terminals 5 are formed between the upper plate 6 and the lower plate 7. Further, since the lower plate 7 is shorter than the upper plate 6 in the shorter-side direction Y, as described above, an opening 4b is provided in a portion where the lower plate 7 is not stacked on the upper plate 6, and communicates between the receiving portions 4a and the outside. Inside the opening 4b, distal ends of the terminals 5 are exposed.

### [Descriptions of Use Method, Operation, and Effect of Connector 1]

To attach the interchangeable lens to the camera body, the connector 1 in the cylindrical interchangeable lens is inserted along the shorter-side direction Y into the annular lens connecting part 3 of the camera body. Therefore, a side surface of the distal end of each contact projection 5b abuts on the distal end of the lens connecting part 3, but the contact projection 5b can be smoothly inserted without being caught because the side surface of the distal end of the contact projection 5b is curved. By this insertion, the corresponding contact portion of the lens connecting part 3 is brought into pressing contact with the contact projection 5b in a direction of arrow C.

When the contact projection 5b is displaced toward the inside of the housing 4 by the pressing contact, the action of leverage is exerted with the contact projection 5b, the internal contact portion 5c, and the end portion 5d being used as the force point, the action point, and the fulcrum, respectively. That is, the end portion 5d is pressed against the inner wall of the corresponding receiving portion 4a of the housing 4 by displacement of the contact projection 5b, and the elastic piece 5a is entirely deflected to generate spring force. The internal contact portion 5c is brought into firm pressing contact with the contact portion of the FPC 2 that is plated with, for example, nickel. In this way, reliable conductive connection is established at the contact projection 5b and the internal contact portion 5c. Therefore, even when slight misalignment is caused between the camera body and the interchangeable lens, for example, by a clearance, a backlash, vibration, or shock, the contact connection is maintained, and connector connection with high connection reliability can be achieved.

The elastic piece 5a of each terminal 5 is not fixed to the housing 4, but is provided as a movable piece movable within the receiving portion 4a. Since the entire terminal 5 is thus movable relative to the housing 4, the contact projection 5b can move not only in the contact direction (height direction Z) with the lens connecting part 3, but also in the directions intersecting the contact direction (longer-side direction X and shorter-side direction Y). Therefore, when the camera body vibrates or moves relative to the housing 4 in a state in which the contact projection 5b is connected to the lens connecting part 3, the contact projection 5b not only can be displaced in the contact direction (height direction Z) with the lens connecting part 3, as described above, but also can move in the movement gap 6b1 to follow displacement of the lens connecting part 3 of the camera body. This can maintain the connection state.

Further, when the lens connecting part 3 comes into pressing contact with the contact projection 5b, as described above, the contact projection 5b at the distal end of the elastic piece 5a is displaced in the direction away from the lens connecting part 3. At this time, since the housing 4 has the opening 4b, the terminal 5 can be displaced without any interference with the housing 4. Hence, for example, there is no need to make the receiving portion 4a large in the height direction Z so as to form a closed space for allowing displacement of the terminal 5. This can reduce the size of the housing 4.

From the viewpoint of size reduction of the housing 4, the flat plate shape of the elastic piece 5a and the small thickness of the housing 4 contribute to size reduction. Further, the portion of the receiving portion 4a receiving the elastic piece 5a has a height corresponding to the sum of the thickness of the elastic piece 5a including the internal contact portion 5c and the thickness of the FPC 2. This also contributes to thickness reduction of the housing 4 and size reduction of the connector 1.

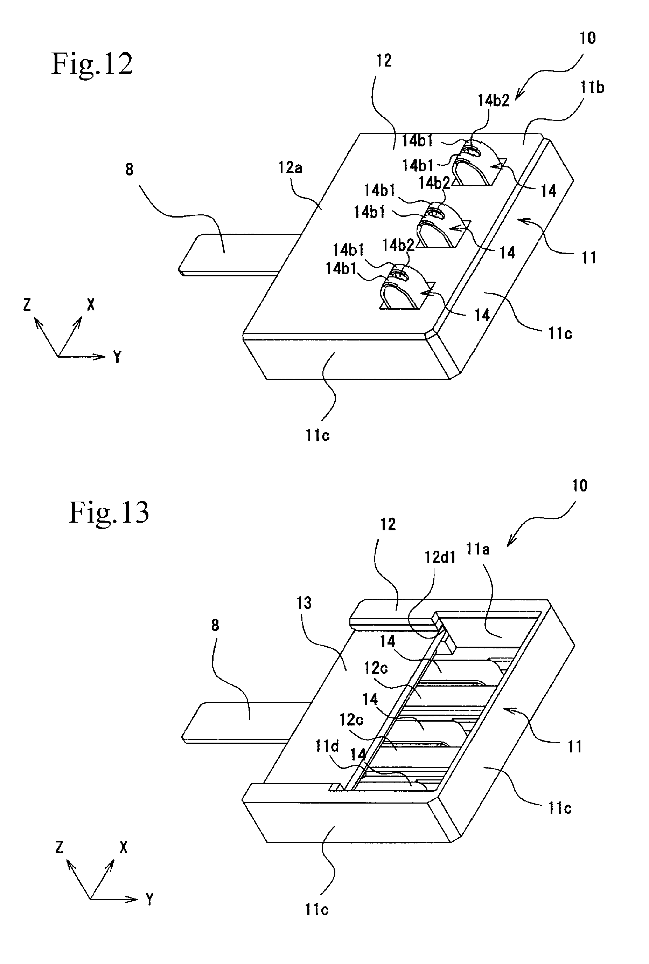

### Second Embodiment [Figs. 12 to 21]

A connector 10 according to a second embodiment is to be provided in a battery charger for an electric apparatus D.

As illustrated in Figs. 12 to 21, the connector 10 connects a charging terminal 9 of the electric apparatus D serving as a "first connecting object" to a circuit of the battery charger.

### [Housing]

As illustrated in Figs. 12 to 18, 20, and 21, a housing 11 is shaped like a flat box formed by a combination of an upper cover 12 and a lower cover 13. Within the housing 11, a plurality of receiving portions 11a are provided to receive elastic pieces 14a of terminals 14. The upper cover 12 and the lower cover 13 are formed of hard resin.

The upper cover 12 has a rectangular upper surface portion 11b, and side surface portions 11c provided along three sides adjacent to the upper surface portion 11b. The lower cover 13 is shaped like a substantially rectangular flat plate.

The upper cover 12 includes a connecting surface 12a to be connected to the charging terminal 9, contact insertion holes 12b in which contact projections 14b of the terminals 14 are to be inserted, and partitioning portions 12c for separating the receiving portions 11a. A plurality of partitioning portions 12c are provided on an inner side surface 12d opposite from the connecting surface 12a.

A plurality of contact insertion holes 12b are provided along an edge in the longer-side direction X of the upper surface portion 11b in the upper cover 12. In the connector 10 of the second embodiment, three contact insertion holes 12b are provided. Through the contact insertion holes 12b, contact projections 14b of the terminals 14 protrude outward from the inside of the receiving portions 11a. The contact insertion holes 12b of the connector 10 are each nearly shaped like a rectangle that is narrow in the pitch direction of the terminals 14 (longer-side direction X) and wide in the direction intersecting the pitch direction (shorter-side direction Y).

On inner sides of the side surface portions 11c of the upper cover 12, fixing grooves 12d1 are provided so that the lower cover 13 is to be fixedly inserted therein.

In a state in which the lower cover 13 is fixed in the fixing grooves 12d1, it has a size corresponding to about half the size of the upper surface portion 11b of the upper cover 12 in the shorter-side direction Y. An opening 11d is thereby formed in a bottom surface of the housing 11.

### [Terminals]

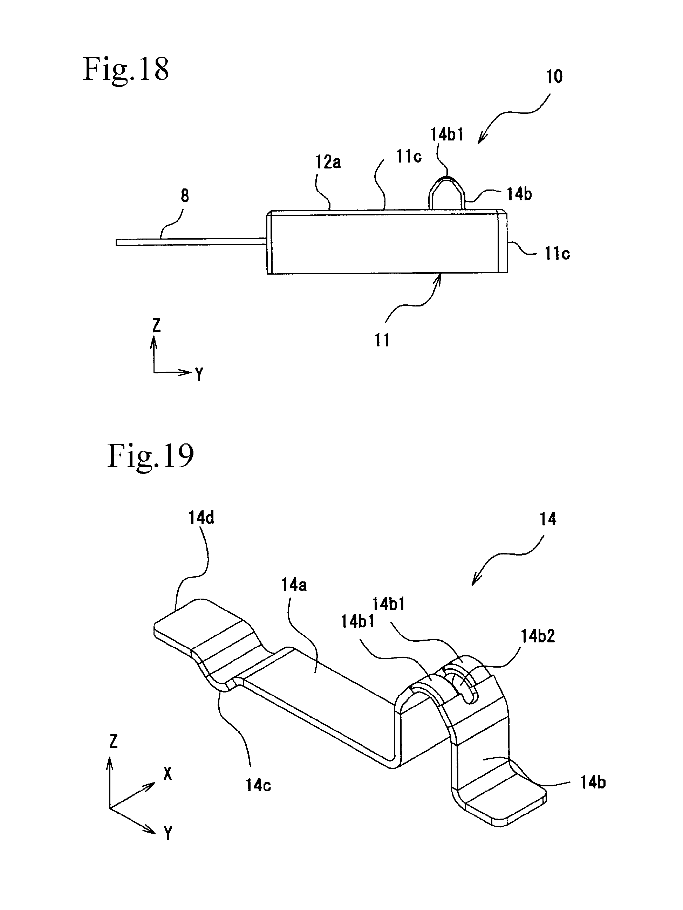

The contact projection 14b of each terminal 14 is formed by bending a flat metal plate in a U-shape, as illustrated in Fig. 19, unlike the terminal 5 in the connector 1 of the first embodiment. At the center of the top of the contact projection 14b, a long and narrow through hole 14b2 is provided, and a pair of contact portions 14b1 each shaped like a narrow plate are provided on opposite sides of the through hole 14b2. By thus forming the through hole 14b2 to decrease the plate width of the contact portions 14b1, the contact area between the contact portions 14b1 and the charging terminal 9 is reduced, and the load applied from the contact portions 14b1 to the charging terminal 9 of the battery is increased. This reliably makes conductive connection between the contact portions 14b1 and the charging terminal 9.

### [Description of Assembly Method for Connector 10]

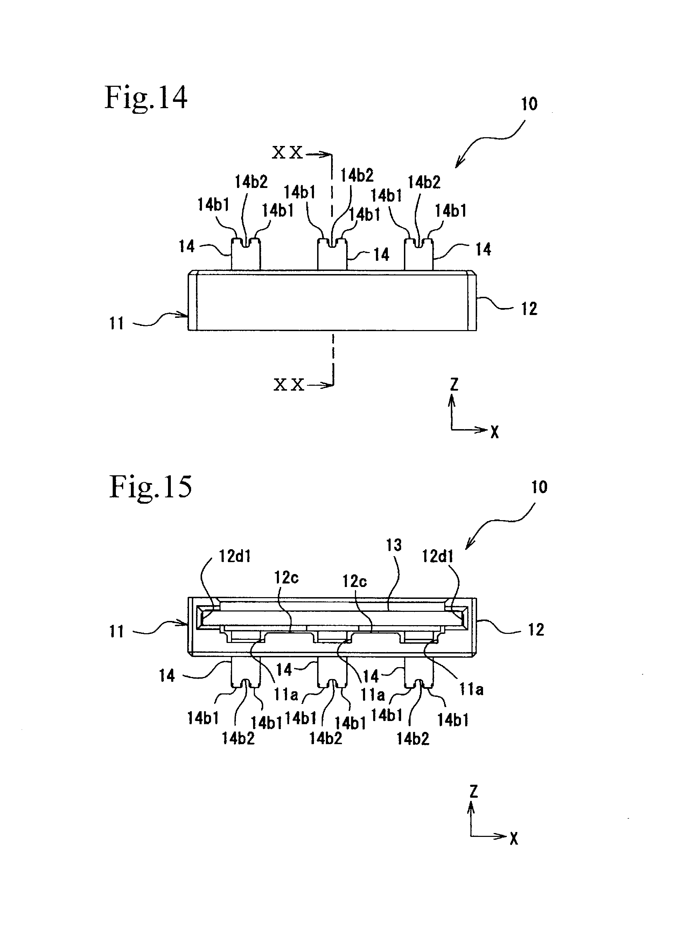

In an assembly method for the connector 10, first, the terminals 14 are arranged one by one between the partitioning portions 12c of the upper cover 12. After that, as illustrated in Fig. 15, an end portion of the lower cover 13 along the shorter-side direction Y is slid and inserted into the fixing grooves 12d1 of the upper cover 12.

Between the upper cover 12 and the lower cover 13, the receiving portions 11a for the terminals 14 are formed. Further, since the lower cover 13 is short in the shorter-side direction Y, as described above, the opening 11d is formed to communicate between the receiving portions 11a and the outside. From the opening 11d, distal ends of the terminals 14 are exposed outside.

### [Descriptions of Use Method, Operation, and Effect of Connector 10]

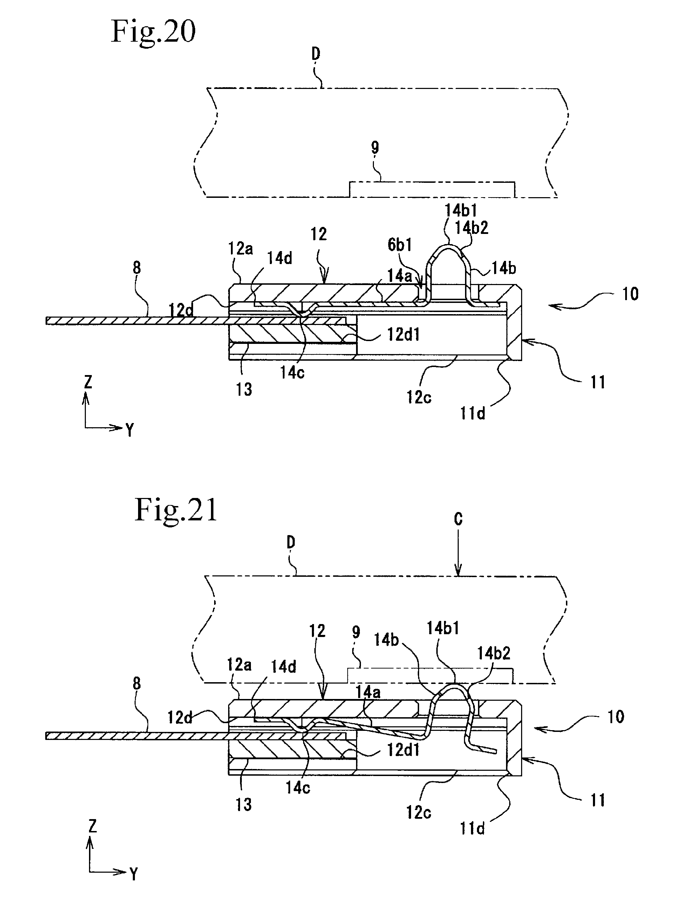

When the unillustrated electric apparatus D is set in the battery charger, as illustrated in Figs. 20 and 21, the charging terminal 9 of the electric apparatus D comes into pressing contact with the each contact projection 14b and displaces the contact projection 14b toward the opening 11d. Thus, the action of leverage is exerted with the contact projection 14b, an internal contact portion 14c, and an end portion 14d being used as the force point, the action point, and the fulcrum, respectively. That is, the end portion 14d is pressed against the inner side surface of the upper cover 12, and the elastic piece 14a is entirely deflected to generate spring force. The internal contact portion 14c is brought into firm pressing contact with a contact portion of an FPC 8 that is plated with, for example, nickel. In this way, reliable electric connection is established at the contact projection 14b and the internal contact portion 14c. Therefore, even when slight misalignment is caused between the electric apparatus D and the battery charger, for example, by a clearance, a backlash, vibration, or shock, the contact connection is maintained, and connector connection with high connection reliability can be achieved. The structure in which the terminals 14 are movable and the operation and effect thereof are the same as those of the connector 1 and the terminals 5 in the first embodiment. Further, this structure is also the same as the connector 1 and the terminals 5 in the first embodiment in that it can contribute to thickness reduction of the housing 11 and size reduction of the connector 10.

While the connector 1 of the first embodiment electrically connects the camera body and the interchangeable lens and the connector 10 of the second embodiment electrically connects the electric apparatus D and the battery charger, the connector can be configured to connect other devices, units, and components.

While the FPCs 2 and 8 are adopted as the "second connecting object" in the above-described embodiments, the present invention can be carried out in accordance with an object that is to be electrically connected, like a hard circuit board or terminals of other connectors.

## Claims

1. A connector comprising:
a housing; and
a terminal provided in the housing,
wherein the terminal includes a first contact portion to be displaced toward an inside of the housing by contact with a first connecting object provided outside the housing, and an elastic piece extending from the first contact portion,
wherein the housing includes a receiving portion in which the terminal is entirely disposed movably,
wherein the elastic piece includes a fulcrum portion serving as a fulcrum on which the first contact portion is displaced, and a second contact portion that is urged on the fulcrum portion into pressing contact with a second connecting object to make conductive connection within the receiving portion of the housing by the displacement of the first contact portion,
wherein the housing has a contact insertion hole in which the first contact portion is inserted,
wherein the first contact portion protrudes from the contact insertion hole, and
wherein a movement gap is provided between the first contact portion and the contact insertion hole to allow movement of the first contact portion toward a rim of the contact insertion hole, and the terminal is entirely moved by the movement of the first contact portion within the movement gap.

2. A connector comprising:
a housing; and
a terminal provided in the housing,
wherein the terminal includes a first contact portion to be displaced toward an inside of the housing by contact with a first connecting object provided outside the housing, and an elastic piece extending from the first contact portion,
wherein the housing includes a receiving portion in which the terminal is entirely disposed movably,
wherein the elastic piece is shaped like a flat plate, and includes a fulcrum portion serving as a fulcrum on which the first contact portion is displaced, and a second contact portion that is urged on the fulcrum portion into pressing contact with a second connecting object to make conductive connection within the receiving portion of the housing by the displacement of the first contact portion, and
wherein the receiving portion is provided with a height corresponding to the sum of thicknesses of the elastic piece and the second connecting object.

3. The connector according to either Claim 1 or Claim 2,
wherein the elastic piece is held movably in a plate surface direction thereof within the receiving portion.

4. The connector according to any one of Claims 1 to 3,
wherein the first contact portion is formed as a contact projection.

5. The connector according to any one of Claims 1 to 4,
wherein the terminal in the housing includes a plurality of terminals arranged in parallel, and
wherein the contact insertion hole is shaped to have a larger hole width in a direction intersecting a pitch direction of the terminals arranged in parallel than in the pitch direction.

6. The connector according to any one of Claims 1 to 5,
wherein the housing has a curved shape, and
wherein the terminals are arranged in parallel in a curving direction of the housing.

7. The connector according to any one of Claims 1 to 6,
wherein the housing is formed by superposing at least a first platelike member and a second platelike member so that the receiving portion is formed between the first platelike member and the second platelike member, and
wherein any of the first platelike member and the second platelike member has an opening to allow the first contact portion to be displaced by contact with the first connecting object.
